Europäisches Patentamt

(19) European Patent Office

Office européen des brevets

(11) Publication number: **0 045 359**
**B1**

# (12) EUROPEAN PATENT SPECIFICATION

(45) Date of publication of patent specification: **30.05.84**

(21) Application number: **81104230.8**

(22) Date of filing: **03.06.81**

(51) Int. Cl.³: **C 03 C 3/30, C 03 C 3/14**

(54) Sealing glass composition.

(30) Priority: **31.07.80 US 174058**

(43) Date of publication of application:
**10.02.82 Bulletin 82/06**

(45) Publication of the grant of the patent:
**30.05.84 Bulletin 84/22**

(84) Designated Contracting States:
**DE FR GB IT**

(56) References cited:
**DE-A-3 002 353**
**US-A-4 186 023**

**CHEMICAL ABSTRACTS, vol. 89, 1978 pafe 324, abstract 202855f Columbus, Ohio, US**

(73) Proprietor: **International Business Machines Corporation**
**Old Orchard Road**
**Armonk, N.Y. 10504 (US)**

(72) Inventor: **Rita, Robert A.**
**No.3-C Lake Katrine Apartments**
**Lake Katrine New York 12449 (US)**

(74) Representative: **Atchley, Martin John Waldegrave**
**IBM United Kingdom Patent Operations Hursley Park**
**Winchester, Hants, SO21 2JN (GB)**

Courier Press, Leamington Spa, England.

**Description**

This invention relates to sealing glass compositions.

The use of special glass compositions for sealing (sometimes referred to as "soldering") glasses or other related materials, such as ceramics, together is well known. Such glasses of the vitreous type were known to have drawbacks, in that they were often insufficiently strong to withstand the rigours of use, primarily due to the fact that such glasses often have cofficients of thermal expansion much higher than those of the glasses which they are expected to bond together. Upon cooling after heat-sealing, undue stresses may be set up in the glasses, which weakens the seal.

In order to overcome some of the problems associated with vitreous solder glasses, solder glasses have been developed having the property of being initially vitreous but of crystallizing or devitrifying during heat-sealing. Such devitrification or crystallization tends to stre jthen the seal structure and lower the coefficient of expansion of the seal.

In addition to the lead oxide, zinc oxide, boron oxide, and other oxides which typically constitute such devitrifiable solder glasses, US—A—3,258,350, and US—A—3,250,631, describe the addition of other components, such as zircon of $\beta$-eucryptite, respectively, in order to better overcome the problem of the coefficient of expansion being higher for the soldering glass than for the materials being joined together.

US—A—3,778,242 describes devitrifiable solder glass compositions having favourable properties with respect to the time and temperature factors necessary for forming a seal, and achieves this by utilizing a composition comprising an uncrystallized or vitreous but crystallizable or devitrifiable solder glass modified with a refractory material and a pre-crystallized glass.

US—A—3,954,486, relates to another modification in sealing glass compositions and methods of using the same, and states that improved results can be obtained if the particle size diameter of the refractory filler is in excess of 37 micrometres and not substantially in excess of 150 micrometres which is significantly different to the present invention. The glass of Example 4 of this patent appears similar in composition in some respects to some of the glasses described below, but that glass has been melted in our laboratory and found to be a devitrifying glass, quite different in behaviour to the glasses of the present invention. In contrast, the glasses of the present invention are non-devitrifying or non-crystallizing compositions that do not contain alkaline oxides and generally do not contain silica, both of which tend to encourage devitrification. US—A—4,006,028, discloses a devitrifying sealing glass using a finer $\beta$-eucryptite which is still much coarser than that used in the present invention.

US—A—3,907,535, describes certain problems that occur using devitrifiable glass and inert refractory particles as described above, and although noting that non-crystallizing glass solders mixed with refractory substances were, upon the basis of preliminary experiments, thought useful to circumvent such problems, states that additional experiments have established that mixtures of non-crystallizing glass solders having a low softening point and $\beta$-eucryptite or similar substances are normally unsuitable from a technical standpoint (e.g. because intolerably high mechanical stresses develop between the mixture components). To solve such problems, US—A—3,907,535 describes a process for soldering using a thermally devitrifiable solder glass and $\beta$-eucryptite, wherein the soldering is discontinued before 50% of the total volume of the composition crystallizes. The examples describe soldering operations for such compositions at 450°C and 550°C, with the specification generally referring to a range of up to 600°C.

Another problem that has been assumed to exist with respect to such mixed phase seal-glasses is that they cannot undergo a redraw process. However, IBM Technical Disclosure Bulletin Volume 20, No. 7, December, 1977, indicates that mixed phase seal-glasses can be redrawn with an appropriate choice of redraw temperature. The seal material used is believed to have been a mixture of $\beta$-eucryptite and a glass which unlike the materials claimed herein is a devitrifying glass.

US—A—3,734,702, describes a crystallizable fusion-type glass sealing composition in which aluminium titanate is incorporated in a lead borosilicate or lead-zinc-borate solder glass, in order to inhibit crystallization, thus providing more time for forming a seal without developing uneven stress concentrations due to crystallization.

Because of limitations inherent in the properties of certain materials which it may be desired to seal, the devitrifiable solder glasses discussed above may be additionally unsatisfactory due to the fact that the high temperatures associated with the devitrified nature of the solder glasses may result in deterioration of the materials being sealed. For example, in the construction of gas panel displays, a dielectric glass is formed over conductors on a plate glass substrate, followed by application of a magnesium oxide coating over the dielectric, and finally by sealing at a temperature of about 485°—490°C. However, due to the fact that there is a maximum temperature-time combination to which the dielectric can be exposed during sealing, and the fact that magnesium-oxide crazing occurs at temperatures of approximately 495°C, a continuing need for improved sealing glass compositions exist.

US—A—4,186,023 discloses many sealing glass compositions, including one consisting of a mixture of glass material and a filler material, in which the glass material consists of, by weight, 80.5% PbO, 5.58% ZnO, 8.38% $B_2O_3$, 0.93% $SiO_2$, 2.23% $Cu_2O$, 1.49% $Bi_2O_3$ and 0.87% lead fluoride, and the

2

filler material is $\beta$-eucryptite having a particle size of 325 mesh, the mixture containing 15% by volume of filler material. The cuprous oxide and lead fluoride are essential ingredients according to the description. The compositions are stated to be non-devitrifiable in the sense that essentially no crystallisation occurs when the glass is exposed to a temperature of 430°C for a period of 15 minutes. However, it is noted that finished seals when exposed to high temperature for an extended time period will exhibit devitrification of the vitreous glass matrix.

The present invention seeks to provide a non-crystallizing sealing glass composition, which can be used for sealing at temperatures less than 450°C and has coefficients of thermal expansion and mechanical properties corresponding to those of the materials being sealed.

Accordingly, the present invention provides a non-crystallizing sealing glass composition consisting of a mixture of glass material and a filler material which does not contain alkaline earth metal oxides, $Al_2O_3$ and CuO or more than 1.5% by weight of silica, the glass material consisting essentially of 75.49% to 84% by weight of PbO, 11.2% to 14.25% by weight of $B_2O_3$, 0 to 1.0% by weight of $SnO_2$, 0 to 1.51% by weight of $GeO_2$, and at least 2% by weight of an additional component, which consists of ZnO and/or $Bi_2O_3$, the amounts of ZnO and $Bi_2O_3$ forming respectively up to 3.1% and up to 9.4% by weight of the glass material, and the filler material consisting of 13.5% to 17% by weight of the mixture of $\beta$-eucryptite, having a maximum particle size less then 100 $\mu$m.

Such sealing glass composition has a coefficient of thermal expansion of 83.5 to 71.5 per K, and results in a favourable combination of properties, being non-crystallizing, capable of forming a seal at a temperature of about 425°C, and having good mechanical strength when used as a seal.

By "non-crystallizing" is meant that little or no devitrification or crystallization occurs when the sealing glass composition is heated and reheated. This results in the additional favourable property, not possessed by other devitrifiable solder glasses, that the composition can be shaped into a desired configuration, fused to form a billet, and redrawn into rods for use, e.g. in the formation of gas panel perimeter seals. It is extremely difficult regularly to prepare suitable billets with typical devitrifiable soldering glasses because cracks can form which do not heal during billet fusion when thermal cycles such as those described herein are used. Further, when rods are redrawn from those billets that can be successfully prepared, the cross-section cannot always be uniformly controlled and the surfaces can be bumpy. These effects are believed to result from crystals which developed from the originally glassy phase during billet preparation, the presence of large size expansion modifier particles, or both. Additionally, due to its devitrifying nature, ring preforms used for sealing the gas inlet tubulation to the float glass substrate in a glass panel require minimum sealing temperatures of about 445°C (1 hour soak) in order to suitably wet the tube and substrate glasses and form acceptable fillets. Preforms prepared from materials described herein flow acceptably and form suitable fillets at temperatures as low as 410°C.

The glass material component of the sealing glass composition is a non-crystallizing material consisting essentially of from about 75.49 to 84.00% by weight PbO, from about 11.2 to 14.25% by weight $B_2O_3$, and (a) up to 3.10% by weight ZnO and/or (b) up to 9.4% by weight $Bi_2O_3$, there being at least 2% ZnO and/or $Bi_2O_3$. Other compositions may also contain (c) up to 1.00% by weight $SnO_2$ and/or (d) up to 1.51% by weight $GeO_2$. In preferred embodiments, the ZnO is present in an amount from about 1.80 to 2.90% by weight. Similarly, $Bi_2O_3$ is preferably present in an amount from 2.6 to 9.4% by weight $SnO_2$ in an amount from 0 to 0.9% by weight, and the $GeO_2$ is present in amount from 0 to 1.9% by weight. In contrast to conventional solder glasses of a devitrifying nature, the glass material of the present invention does not contain an alkaline earth metal oxide, such as BaO, nor $Al_2O_3$ and CuO, and in most cases it does not contain $SiO_2$.

Glasses having compositions listed in Table 1 have the combined qualities of a relatively low softening temperature and being essentially free of crystallization. Generally, the powdered glasses alone are not completely stable in that although no crystallization is detectable by X-ray defraction or DTA (differential thermal analysis) techniques, a few isolated crystals can be detected optically in the approximate temperature range of 390 to 460°C. Glasses G and H are stable under the conditions given above, i.e. no crystals are detected. When the glasses in Table 1 are combined with $\beta$-eucryptite, not only are no crystals detected by DTA and X-ray techniques, but microscopic observation of both free surfaces and polished sections does not reveal any crystal development from the glass phase.

The relatively small amount of ZnO and/or $Bi_2O_3$ is believed to be the primary reason that the glasses do not devitrify. When neither is present, or when the concentrations exceed the specified limits, undesirable crystallization results. The addition of $SnO_2$ and/or $GeO_2$ allows some flexibility in the concentrations of the other components to lower the softening temperature without introducing undesirable crystallization, but the ZnO and/or $Bi_2O_3$ must be present.

For some compositions, as much as 1.5 weight % $SiO_2$ can be added, but generally it tends to induce crystallization and, as a rule, is omitted. Decreasing the $B_2O_3$ content significantly (e.g. 1 to 2%) will result in crystallization and increasing the concentration undesirably increases the softening temperature.

TABLE 1

| Sample | A | B | C | D | E | F | G | H | I | J | K | L |
|---|---|---|---|---|---|---|---|---|---|---|---|---|
| Pbc | 84.00 | 84.00 | 82.78 | 84.00 | 80.96 | 84.00 | 79.03 | 75.49 | 78.60 | 81.68 | 79.11 | 81.83 |
| ZnO | 2.00 | 2.00 | 2.99 | — | — | 1.00 | 1.90 | 1.86 | 3.10 | 1.91 | 2.81 | 1.88 |
| $Bi_2O_3$ | — | — | — | 2.00 | 5.32 | 1.00 | 5.45 | 9.33 | 5.47 | 2.73 | 5.37 | 2.69 |
| $SnO_2$ | — | — | — | — | — | — | — | — | — | 0.88 | 0.87 | 0.87 |
| $B_2O_3$ | 12.50 | 14.00 | 14.23 | 14.00 | 13.72 | 14.00 | 13.61 | 13.31 | 12.83 | 12.80 | 11.84 | 11.22 |
| $GeO_2$ | — | — | — | — | — | — | — | — | — | — | — | 1.51 |
| $SiO_2$ | 1.50 | — | — | — | — | — | — | — | — | — | — | — |
| $Bi_2O_3+ZnO$ | 2.00 | 2.00 | 2.99 | 2.00 | 5.32 | 2.00 | 7.35 | 11.19 | 8.57 | 4.64 | 8.18 | 4.57 |
| $GeO_2+SiO_2$ | 1.50 | — | — | — | — | — | — | — | — | — | — | 1.51 |
| Glassy edge (°C)[1] | 355 | 350 | 357 | 350 | 350 | 355 | 355 | 355 | 350 | 350 | 345 | 342 |
| Tg (DTA) | | 334 | | | | | 335 | | | | 329 | 328 |
| $\alpha(\times 10^7 °C^{-1})$ | | 124 | | | | | 120 | | | | 126 | 128 |
| Fiber softening temp. (°C) | | | | | | | | | | | | 344 |

[1] In evaluating glass compositions, a gradient furnace test was used wherein a powdered glass layer containing no expansion modifier was applied to a float glass substrate heated at 5°C/min and allowed to soak for 1 hour with the temperature varying in a controlled manner from one end of the sample to the other. When the sample is cooled, a rather sharply defined line is observed corresponding to a temperature below which the powder is essentially unfused and opaque, and above which the powder has fused into a vitreous mass. Under the particular conditions utilized, the temperature of this "glassy edge" closely approximates the fibre softening temperature of the glass and hence provides a measure of the relative flowability. Further, the extent of crystallization at any temperature above the glassy edge can be readily observed.

β-eucryptite has the essential characteristic of having a negative coefficient of thermal expansion and is used in an amount sufficient to establish expansion compatibility with the soda-lime-silica (float) glass substrates, the high-lead dielectric glass and the tubulation glass typically forming a gas display panel. To this end, the sealing glass should have an expansion coefficient between room temperature and 300°C of about 83.5 to $71.5 \times 10^{-7}$ per K and contains 13.5 to 17.0% by weight β-eucryptite for this purpose. In embodiments preferred from the combined aspects of flow and expansion, the β-eucryptite is present in an amount from 14.5 to 16.5% by weight.

Additionally, the size and concentration of large β-eucryptite particles is limited in preparing rod preforms utilized in gas panel perimeter seals. It has been found that the seal configuration as well as the physical form and behaviour of the perimeter seal can be enhanced by limiting the maximum size of the particles to less than the desired panel gap and preferably to a size much smaller than the desired gap. When the gas panel assembly is heated to the sealing temperature, the glassy phase of the seal material softens and begins to flow. As the seal broadens and is compressed, the rigid β-eucryptite particles are displaced by the adjacent flowing glass and are dispersed throughout the seal. However, the forces acting upon the β-eucryptite particles are apparently not uniform and large particles have a tendency to concentrate in localized regions having a lower capacity to flow than in adjacent regions deficient in larger particles. Depending upon the ultimate gap attained, the sealing rod dimensions, and the size and amount of large particles, this can result in a seal of varying width and a ragged seal perimeter. Regions of minimum seal width (containing concentrated large particles) are potentially undesirable stress concentrators and the localized inhomogeneity may result in different and possibly undesirable thermomechanical properties relative to a more uniform material. Further, when a relatively large quantity of larger β-eucryptite particles is used in preparing the sealing powder, the redrawn rod preforms have bumpy surfaces containing protuberances associated with large particles just under the rod surface. The rough surface can make measurement and dimensional control of the rod difficult, render the rod more susceptible to displacement after positioning during panel construction, and increase the probability that fragments will chip off the rods during or after assembly of the panel. Chips landing in the electrically active area of the panel will degrade the properties of the secondary emissive (MgO layer) and hence the electrical operation of the panel in that area. A specific example that demonstrates the enhanced behaviour when the modifier particle size is controlled is described below.

Reference Example

A glass having a composition (unless otherwise indicated all percentages are by weight) of 81.8% $PbO$, 1.9% $ZnO$, 2.7% $Bi_2O_3$, 0.9% $SnO_2$, 11.2% $B_2O_3$, and 1.5% $GeO_2$ is powdered and combined with powdered β-eucryptite (14.5% of mixture) having the particle size distribution of Example A in Table 2 below. For comparison the same glass powder is combined with powdered β-eucryptite having the particle size distribution B shown in Table 2 below:

TABLE 2

| Cumulative mass | Equivalent spherical diameter micrometers | |
|---|---|---|
| (% finer) | A | B |
| 100% | 70 | 30 |
| 95% | 40 | 19 |
| 90% | 32 | 15 |
| 80% | 22 | 10 |
| 70% | 15 | 7.2 |
| 60% | 8.7 | 6.0 |
| 50% | 6.3 | 5.0 |
| 40% | 4.7 | 4.0 |
| 30% | 3.6 | 3.2 |
| 20% | 2.3 | 2.4 |
| 10% | 1.2 | 1.4 |

In the case of β-eucryptite A, the resultant rods are rough and contain projections, and the seals produced when construction panels have a nominal 100 μm (4 mil) gap have ragged perimeters. On the other hand, in the case of β-eucryptite B, the rod surfaces are smooth, the resultant seal widths are uniform, and the seal perimeter is smooth. Furthermore, the difference in the particle size distributions does not seem to significantly affect the ability of the seal preform to flow.

The β-eucryptite used in the present invention should have a maximum particle size less than 100 μm and preferably of 30 μm. Moreover, in terms of particle size distribution, preferably approximately 90% of the modifier has a particle size less than or equal to 15 μm and more preferably at least 90% has a particle size less than 10 μm.

In use, the non-crystallizing sealing glass composition is applied to the glass (or related material) work piece, and is heated to a temperature of about 425°C until thermal fusing occurs. A typical heat-up rate can vary from 5°C to 7.5°C per minute. The sealing glass composition may be applied either in the form of a powder, or conveniently as a previously formed fillet. Preparation of a gas display panel structure, wherein a sealing glass composition according to the present invention may be used, is described, for example, in US—A—3,499,167 and US—A—3,559,190, and in an article of D. L. Bitzer and H. G. Slottow entitled "The Plasma Display Panel—Digitally Addressable Display with Inherent Memory", Proceedings of the Fall Joint Computer Conference, IEEE, November, 1966 pp. 541—547.

While the sealing glass of the present invention can be combined with an organic liquid vehicle and the fluid mixture applied using techniques such as spraying, screen printing, and extrusion, it is preferred to form solid preforms which can facilitate the assembly process and minimize or eliminate exposure of the electrically active area to organic contaminants that may degrade panel operation. The preferred preform for the perimeter seal is a rod of rectangular cross-section and appropriate length and for the tube seal is a cylinder that can encircle the gas tubulation at the base where it contacts the substrate glass.

To prepare the rod preform, the blended powder is pressed into a bar shape without the addition of accessory organics and is fused into a billet by heating-up at about 6°C/min to between 400 and 415°C and holding the material at the temperature for about 20 to 30 minutes. After cooling, the billet surfaces are finished and rods are redrawn using a procedure analogous to that used to redraw conventional vitreous glasses. The redraw temperature is intermediate the softening point of the glass phase (about 344°C) and the ultimate seal temperature (about 425°C) but closer to the latter. Thus, in order to prepare the rods the material is exposed twice to temperatures 45 to 70°C above the base glass softening temperature, and must still be able to flow (and at relatively low temperatures) when reheated during the sealing operation. For this reason it is important that the glass component be of the non-crystallizing type since most of the low temperature lead borate solder glasses will crystallize during the above thermal cycles and will not have adequate flow to form suitable seals, if the preforms can even be fabricated.

The ring preforms are prepared using conventional ceramic powder pressing procedures and sintered about 5 to 45°C above the fibre softening temperature of the glass phase. The seal materials described here offer greater processing latitude and generally lower seal temperatures.

The present invention will be illustrated in more detail by the following examples, in which, unless otherwise indicated, all percentages are by weight.

Example 1

Glasses B, G and L were each combined with $\beta$-eucryptite modifier, with the latter comprising 14.5 weight % of the total mixture. Seal rod and seal ring preforms were prepared from the mixtures and test samples were sealed using procedures designed to simulate gas panel construction. Adequate flow was achieved for the rod preforms after one hour at 425 to 430°C using a 5°C/min heating rate, and after one hour at 410 to 415°C for the seal rings, again using a 5°C/min heating rate. The seal temperature for the blend prepared using glass L was in both cases about 5°C lower than for blends based upon the other two glasses as would be expected from the Tg and glassy edge data. Standard photo-elastic stress analysis samples (Hagy & Smith, *J. Can. Cer. Soc,* vol. 38 p. 63, 1969) were prepared using seal materials prepared using $\beta$-eucryptite (14.5 wt.%) and glasses B, G and L. The expansion mismatch found by this technique was 118, 122, and 102 PPM respectively (float glass in compression), which is more than adequate. The expansion coefficients for mixtures based on glasses B and L (300°C-RT) were $79.4 \times 10^{-7}$ and $81.2 \times 10^{-7} \, ^\circ C^{-1}$ respectively.

Example 2

Hermetic gas panels were fabricated according to the above thermal cycle using seal preforms prepared from powdered blends comprised of 14.5 wt.% $\beta$-eucryptite and glasses B and L. The electrical characteristics were at least as good as panels constructed with conventional (prior art) vitreous or devitrifying solder glasses. Such panels have been subjected to a burst test in which the panel interior is uniformly pressurized by introducing gas through the inlet tube until the panel fractures. An overly weak seal would result in a low break pressure since fracture usually originates in the seal. The burst pressures for the $\beta$-eucryptite containing vitreous glasses were found to be the same as for similar panels sealed with either devitrifying solder glasses or conventional vitreous solder glasses.

Example 3

Ultimate seal strength was evaluated by measuring the modulus of rupture (MOR) (3-point loading-beam sample) of a glass B plus $\beta$-eucryptite mixture (14.5%), glass B alone, a typical vitreous seal glass, and a typical devitrifying solder glass. All samples were prepared using identical procedures and fused at temperatures representative of their respective seal cycles. The results are given below:

## 0 045 359

| Material | MOR (psi) | MOR (pascals) |
|---|---|---|
| Vitreous solder glass | 4,850 | 33,439,571 |
| Glass B | 4,950 | 34,129,047 |
| Glass B+ $\beta$-eucryptite | 7,330 | 50,538,568 |
| Devit. solder glass (Corning 7575) | 7,300 | 50,331,726 |

As can be seen the glass B— $\beta$-eucryptite mixture has a strength closely approximating the strength of a typical devitrifying solder glass. The latter is generally considered to be among the stronger materials available for these seal applications.

### Claims

1. A non-crystallizing sealing glass composition consisting of a mixture of glass material and a filler material, which does not contain alkaline earth metal oxides, $Al_2O_3$ and CuO or more than 1.5% by weight of silica, the glass material consisting essentially of 75.49% to 84% by weight of PbO, 11.2% to 14.25% by weight of $B_2O_3$, 0 to 1.0% by weight of $SnO_2$, 0 to 1.51% by weight of $GeO_2$, and at least 2% by weight of an additional component, which consists of ZnO and/or $Bi_2O_3$, the amounts of ZnO and $Bi_2O_3$ forming respectively up to 3.1% and up to 9.4% by weight of the glass material, and the filler material consisting of 13.5% to 17% by weight of the mixture of $\beta$-eucryptite, having a maximum particle size less than 100 $\mu$m.

2. A composition according to claim 1, in which the $\beta$-eucryptite is present in an amount from 14.5% to 16.5% by weight.

3. A composition according to claim 1, in which the $\beta$-eucryptite particles have a maximum particle size of 30 micrometres.

4. A composition according to claim 3 in which approximately 90% of the $\beta$-eucryptite has a maximum particle size of 15 micrometres.

5. A composition according to claim 3, in which at least 90% of the $\beta$-eucryptite has a maximum particle size of 10 micrometres.

6. A composition according to any preceding claim, in which ZnO is present in an amount of 1.8% to 2.9% by weight.

7. A composition according to any preceding claim, in which $Bi_2O_3$ is present in an amount from 2.6% to 9.4% by weight.

8. A method of forming a seal on a glass work piece, comprising applying a non-crystallizing sealing glass composition according to any preceding claim to the work piece, and thermally fusing the composition at a temperature of about 425°C.

9. A method according to claim 8, in which the glass work piece is a gas display panel.

### Patentansprüche

1. Nicht kristallisierende Dichtungsglas-Zusammensetzung, bestehend aus einem Gemisch von Glasmaterial und einem Füllmaterial, welches keine Erdalkalimetalloxide, $Al_2O_3$ und CuO oder mehr als 1,5 Gewichtsprozent Siliciumdioxid enthält, wobei das Glasmaterial im wesentlichen aus 75,49 bis 84 Gewichtsprozent PbO, 11,2 bis 14,25 Gewichtsprozent $B_2O_3$, 0 bis 1,0 Gewichtsprozent $SnO_2$, 0 bis 1,51 Gewichtsprozent $GeO_2$, und mindestens 2 Gewichtsprozent einer zusätzlichen Komponente, die aus ZnO und/oder $Bi_2O_3$ gebildet wird, besteht, wobei die Mengen von ZnO und $Bi_2O_3$ bis zu 3,1 Gewichtsprozent bzw. bis zu 9,4 Gewichtsprozent des Glasmaterials bilden, und wobei das Füllmaterial, das 13,5 bis 17 Gewichtsprozent des Gemisches bildet, aus $\beta$-Eucryptit mit einer maximalen Teilchengröße von weniger als 100 $\mu$m besteht.

2. Zusammensetzung nach Anspruch 1, worin der $\beta$-Eucryptit in einer Menge von 14,5 bis 16,5 Gewichtsprozent vorhanden ist.

3. Zusammensetzung nach Anspruch 1, worin die $\beta$-Eucryptit Teilchen eine maximale Teilchengröße von 30 Mikrometern aufweisen.

4. Zusammensetzung nach Anspruch 3, worin etwa 90 Gewichtsprozent des $\beta$-Eucryptits eine maximale Teilchengröße von 15 Mikrometern aufweist.

5. Zusammensetzung nach Anspruch 3, worin mindestens 90 Gewichtsprozent des $\beta$-Eucryptits eine maximale Teilchengröße von 10 Mikrometern aufweist.

6. Zusammensetzung nach einem der voranstehenden Ansprüche, worin ZnO in einer Menge von 1,8 bis 2,9 Gewichtsprozent vorhanden ist.

7. Zusammensetzung nach einem der voranstehenden Ansprüche, worin $Bi_2O_3$ in einer Menge von 2,6 bis 9,4 Gewichtsprozent vorhanden ist.

8. Verfahren zur Bildung eines Verschlusses an einem Glas-Werkstück, wobei eine nicht kristallisierende Dichtungsglas-Zusammensetzung nach einem der voranstehenden Ansprüche auf das Werkstück aufgebracht wird und die Zusammensetzung bei einer Temperatur von etwa 425°C thermisch geschmolzen wird.

9. Verfahren nach Anspruch 8, worin das Glas-Werkstück ein Gas(plasma)anzeigefeld (gas display panel) ist.

## Revendications

1. Une composition de verre de scellement non-cristallisable constituée d'un mélange de matière vitreuse et d'une matière de charge, qui ne contient pas d'oxydes de métaux alcalino-terreux, de $Al_2O_3$ et de CuO ou plus de 1,5% en poids de silice, la matière vitreuse étant constituée essentiellement de 75,49% à 84% en poids de PbO, de 11,2% à 14,25% en poids de $B_2O_3$, de 0 à 1,0% en poids de $SnO_2$, de 0 à 1,51% en poids de $GeO_2$ et au moins 2% en poids d'un constituant supplémentaire, qui consiste en ZnO et/ou en $Bi_2O_3$, les quantités de ZnO et de $Bi_2O_3$ formant respectivement jusqu'à 3,1% et jusqu'à 9,4% du poids de la matière vitreuse, et la matière de charge étant constituée de 13,5 à 17% du poids du mélange de bêta-eucryptite ayant une grosseur maximale de particules de moins de 100 $\mu$m.

2. Une composition selon la revendication 1, dans laquelle la bêta-eucryptite est présente à raison de 14,5% à 16,5% en poids.

3. Une composition selon la revendication 1, dans laquelle lest particules de bêta-eucryptite ont une grosseur maximale de 30 $\mu$m.

4. Une composition selon la revendication 3, dans laquelle environ 90% de la bêta-eucryptite a une grosseur maximale de particules de 15 $\mu$m.

5. Une composition selon la revendication 3, dans laquelle au moins 90% de la bêta-eucryptite a une grosseur maximale de particules de 10 $\mu$m.

6. Une composition selon l'une quelconque des revendications précédente, dans laquelle ZnO est présent à raison de 1,8% à 2,9% en poids.

7. Une composition selon l'une quelconque des revendications précédents, dans laquelle $Bi_2O_3$ est présent à raison de 2,6% à 9,4% en poids.

8. Une méthode de formation d'un joint sur une pièce travaillée, selon laquelle on applique une composition de verre de scellement non-cristallisable selon l'une quelconque des revendications précédentes à la pièce travaillée et on effectue une fusion thermique de la composition à une température d'environ 425°C.

9. Une méthode selon la revendication 8, dans laquelle la pièce travaillée est un panneau d'affichage à gaz.